(19) **Europäisches Patentamt**

**European Patent Office**

**Office européen des brevets**

(11) **EP 0 779 168 B1**

(12) **EUROPÄISCHE PATENTSCHRIFT**

(45) Veröffentlichungstag und Bekanntmachung des Hinweises auf die Patenterteilung:
**27.06.2001 Patentblatt 2001/26**

(51) Int Cl.$^7$: **B60G 17/052**, B60G 17/015

(21) Anmeldenummer: **96118355.5**

(22) Anmeldetag: **15.11.1996**

(54) **Niveauregeleinrichtung**

Level control device

Dispositif de réglage du niveau

(84) Benannte Vertragsstaaten:
**DE FR GB IT SE**

(30) Priorität: **14.12.1995 DE 19546727**

(43) Veröffentlichungstag der Anmeldung:
**18.06.1997 Patentblatt 1997/25**

(73) Patentinhaber: **WABCO GmbH & Co. OHG**
**30453 Hannover (DE)**

(72) Erfinder:
• **Meier, Jörg**
**31840 Hess. Oldendorf (DE)**
• **Lentz, Uwe**
**31535 Neustadt (DE)**
• **Gocz, Reinhard**
**30926 Seelze (DE)**

(74) Vertreter: **Schrödter, Manfred, Dipl.-Ing.**
**WABCO GmbH & Co. OHG**
**Postfach 91 12 62**
**30432 Hannover (DE)**

(56) Entgegenhaltungen:
**EP-A- 0 372 218** **DE-A- 3 743 093**
**DE-A- 3 815 614**

• **PATENT ABSTRACTS OF JAPAN vol. 011, no. 360 (M-645), 25.November 1987 & JP 62 137212 A (MAZDA MOTOR CORP), 20.Juni 1987,**
• **PATENT ABSTRACTS OF JAPAN vol. 016, no. 335 (M-1283), 21.Juli 1992 & JP 04 100712 A (NISSAN MOTOR CO LTD), 2.April 1992,**
• **PATENT ABSTRACTS OF JAPAN vol. 013, no. 083 (M-802), 27.Februar 1989 & JP 63 279914 A (FUJI HEAVY IND LTD), 17.November 1988,**
• **PATENT ABSTRACTS OF JAPAN vol. 014, no. 075 (M-0934), 13.Februar 1990 & JP 01 293211 A (FUJI HEAVY IND LTD), 27.November 1989,**
• **PATENT ABSTRACTS OF JAPAN vol. 012, no. 478 (M-775), 14.Dezember 1988 & JP 63 199112 A (KOMATSU LTD), 17.August 1988,**
• **PATENT ABSTRACTS OF JAPAN vol. 013, no. 318 (M-852), 19.Juli 1989 & JP 01 103516 A (MITSUBISHI MOTORS CORP), 20.April 1989,**
• **PATENT ABSTRACTS OF JAPAN vol. 016, no. 467 (M-1317), 29.September 1992 & JP 04 166409 A (MITSUBISHI MOTORS CORP), 12.Juni 1992,**
• **PATENT ABSTRACTS OF JAPAN vol. 010, no. 388 (M-549), 25.Dezember 1986 & JP 61 178210 A (TOYOTA MOTOR CORP), 9.August 1986,**

**Beschreibung**

Die Erfindung betrifft eine mit Druckmittel arbeitende Niveauregeleinrichtung insbesondere für Fahrzeuge, gemäß dem Oberbegriff des Patentanspruchs 1.

Eine derartige Niveauregeleinrichtung ist aus der Veröffentlichung VDI-Berichte Nr. 774,1989, "Elektronisch gesteuerte Luftfederung und Dämpferregelung" von Dr. K.-H. Schönfeld, VDI, und H. Geiger, Hannover bekannt.

In der vorerwähnten Veröffentlichung ist beschrieben, daß ein neues Soll-Niveau für eine oder mehrere Achsen unter Verwendung einer Fernbedienung eingestellt und abgespeichert wird. Die Fernbedienung verfügt über mehrere Taster; das Betätigen der Taster "Heben" bzw. "Senken" bewirkt dabei das Be- bzw. Entlüften der entsprechenden Luftfederbälge an den Achsen.

Mit dieser Einstellung über die Fernbedienung wird bezüglich einer Achse eine Geradestellung definiert und abgespeichert.

Aus der EP-A1-0 372 218 ist eine Niveauregelung für luftgefederte Fahrzeuge gemäß dem Oberbegriff des Anspruchs 1 bekannt, bei der eine Steuereinrichtung [dort (15)] besondere Maßnahmen für den Fall vornimmt, in dem bei der separaten Niveauregelung der rechten und der linken Fahrzeugseite während einer Niveauabsenkung das Niveau einer Fahrzeugseite noch oberhalb des Sollwertes ist, obwohl der Druck in dem entsprechenden Luftfederelement bereits auf einen zulässigen Mindestdruck abgesunken ist; dieser Fall tritt hauptsächlich bei einer Verspannung des Fahrzeugrahmens, insbesondere bei unbeladenem Fahrzeug auf. Die besonderen Maßnahmen bestehen darin, daß unter Verwendung von Ventilen [dort (25, 26, 27)], Weg-Sensoren [dort (5, 6)] und Druck-Sensoren [dort (9, 10)] die Steuereinrichtung dafür sorgt, daß auf der Seite entlüftet wird, auf der das Niveau bereits innerhalb eines Toleranzbandes liegt, um das mittlere Fahrzeugniveau auf einen zulässigen Wert zu bekommen.

Die JP-A-63 279 914 schlägt eine Funktionsverbesserung für ein aktives pneumatisches Fahrwerk vor, bei dem von einer Steuereinrichtung aufgrund von Beschleunigungs- und Abstandssensoren eine pneumatische Gesamt-Durchflußrate bestimmt wird und die Belüftungs- und Entlüftungsventile eines Steuerventiles von der Steuereinrichtung derart betätigt werden, daß diese Gesamt-Durchflußrate eingehalten wird. Die Verbesserung besteht darin, daß der Beladungszustand des Fahrzeuges aufgrund eines Drucksensor-Meßwertes ermittelt und diskriminiert wird, und daß aufgrund des diskriminierten Beladungs-Zustandes die von der Steuereinheit vorgegebene Durchflußrate in Stufen geändert wird.

Aus der JP-A-63 199 112 ist eine Einrichtung bekannt, bei der aufgrund von durch Sensoren ermittelten Drücken in Federungszylindern in einer Zentraleinheit bestimmt wird, ob ein LKW leer oder beladen ist. Zur Reduzierung von Schwingungen wird bei leerem Fahrzeug die Dämpferkraft der Fahrzeug-Dämpfer auf einen vergleichsweise geringen und bei beladenem Fahrzeug auf einen vergleichsweise großen Wert eingestellt. Die Dämpferkraft wird auch ab einer bestimmten Fahrgeschwindigkeit und unabhängig vom Beladungszustand erhöht, wenn durch einen Bremssensor das Einbremsen des Fahrzeugs erkannt wird; hierdurch wird ein Fahrzeug-Nicken verhindert. Weiter wird, wenn bei beladenem Fahrzeug anhand eines Lenksensors schnelle Lenkbewegungen bei hoher Fahrgeschwindigkeit festgestellt werden, die Dämpferkraft erhöht, um ein Fahrzeug-Wanken zu vermeiden.

Die eingangs genannte Niveauregeleinrichtung weist jedoch den Nachteil auf, daß bei leerem Fahrzeug die Geradestellung (Fernbedienungs-Geradestellung) nicht immer erreicht wird, und es unter Umständen sogar zu einer Entlüftung eines Luftfederbalges kommen kann.

Der Erfindung liegt deshalb die Aufgabe zugrunde, Maßnahmen für eine mit Druckmitteln arbeitende Niveauregeleinrichtung der eingangs genannten Art vorzusehen, damit eine Geradestellung der Fahrzeugachse auch bei unbeladenem Fahrzeug in jedem Fall ermöglicht wird, wobei ausgeschlossen werden muß, daß es zu einer Entlüftung eines Luftfederbalges kommt.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung baut auf der Erkenntnis auf, daß die erwähnten Geradestellungsprobleme durch die Wirkung der im Fahrzeug eingebauten Stabilisatoren begründet sind, welche den Vorgang der Niveauregelung beeinflussen.

Neben den Luftfederbälgen wirken nämlich auch die Stabilisatoren auf die Höheneinstellung des Fahrzeug-Aufbaus ein. Bei einem Schiefstand des Fahrzeugs erzeugen die Stabilisatoren Momente, welche der Schiefstellung entgegenwirken und das Fahrzeug in eine gerade Stellung zwingen. Die Stabilisator-Geradestellung bezüglich einer bestimmten Achse kann jedoch unterschiedlich sein zu der oben erläuterten Fernbedienungs-Geradestellung. Sollten solche Geradestellungs-Unterschiede bestehen, so kann es vorkommen, daß der Stabilisator die Achse an ihrer linken oder rechten Seite über das Toleranzband hinaushebt, welches um das Soll-Niveau gelegt ist.

Ganz speziell bei einem leeren Fahrzeug, bei dem sich wegen der fehlenden Zuladung ein Stabilisator-Moment vergleichsweise stark auswirkt, sind derartige Unterschiede in der Geradestellung zu erwarten.

Wird, wie oben erwähnt, das Toleranzband an der rechten Seite unterschritten, so erfolgt an der rechten Seite eine Niveauregelung: Der rechte Luftfederbalg wird belüftet bis die Höhe des Aufbaus an der rechten Seite wieder in das Soll-Niveau-Toleranzband zurückkehrt. Durch diese Belüftung wird der Fahrzeugaufbau insgesamt angehoben, wobei das weiter wirksame Stabilisator-Moment, das vorher zu einer Toleranzband-Unterschreitung an der rechten Seite geführt hat, nun bewirken kann, daß das Toleranzband an der linken Seite überschritten wird. In diesem Fall findet nun an der linken Seite eine Niveauregelung statt, im Rahmen derer versucht wird, durch Entlüftung des linken Luftfederbalges, der im Falle des leeren Fahrzeugs ohnehin nur ein geringes Druckniveau aufweist, wieder in das Toleranzband zurückzukehren. Im Verlauf dieser Entlüftung kann es vorkommen, daß der linke Luftfederbalg vollkommen entlüftet wird.

Bei der bekannten Niveauregeleinrichtung ist es also möglich, daß die gespeicherte Geradestellung (Fernbedienungs-Geradestellung) nicht erreicht wird und es sogar zur vollständigen Entlüftung eines Luftfederbalges kommt. Die vollständige Entlüftung eines Luftfederbalges ist nachteilig, da ein entlüfteter Luftfederbalg keine Federwirkung mehr entfalten kann. Es kommt daher zusätzlich zu einer Fehler-Abschaltung der Niveauregeleinrichtung, was unerwünscht ist, da die Niveauregelungseinrichtung nach einer Fehler-Abschaltung neu initialisiert und in Betrieb genommen werden muß.

Die Erfindung wird im folgenden anhand eines Ausführungsbeispiels, das in den Zeichnungen dargestellt ist, näher erläutert.

Dabei zeigen:

Fig. 1                die Komponenten der Niveauregeleinrichtung für eine Achse,

Fig. 2                das Sollwert-Toleranzband für sowohl die Zwei-Meßpunkt-Regelung als auch für die Ein-Meßpunkt-Regelung,

Fig. 3a bis 3c        zu Fig. 1 unterschiedliche Varianten der Beladungs-Ermittlungs-Einrichtung.

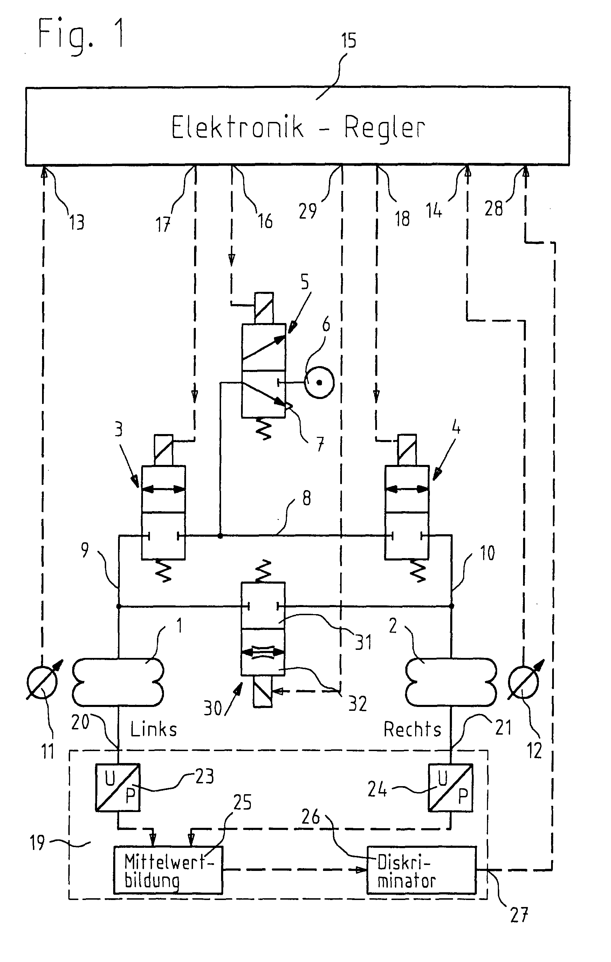

In Fig. 1 gibt es zwischen den Komponenten pneumatische und elektrische Verbindungen: Pneumatische Verbindungen werden als durchgehende Linie dargestellt, während elektrischen Verbindungen als gestrichelte Linie dargestellt werden.

Der Fahrzeugaufbau (gefederter Teil des Fahrzeugs) ist gegenüber den Fahrzeugachsen (ungefederter Teil des Fahrzeugs) durch Luftfederbälge abgestützt. Bezüglich einer Achse sind dies ein Luftfederbalg (1) an der linken und ein Luftfederbalg (2) an der rechten Seite der Achse. Da die Luftmenge in den Luftfederbälgen die Höhe des Fahrzeugaufbaus über der Fahrzeugachse bestimmt, kann diese Höhe durch Veränderung der Luftmenge in den Luftfederbälgen verändert werden. Druck, Volumen und Temperatur eines Gases stehen aufgrund der Gasgesetze zueinander in Zusammenhang, und so führt bei gleichem Volumen eines Luftfederbalges (konstantes Niveau) eine Veränderung der Luftmenge in diesem Luftfederbalg ebenfalls zu einer Veränderung des Drucks im Luftfederbalg. Jedem Luftfederbalg ist daher ein Belüftungs-/Entlüftungs-Ventil zugeordnet. Konstruktiv ist ein Belüftungs-/Entlüftungs-Ventil als 2/2-Wege-Magnetventil ausgeführt mit einer Abschlußstellung, in der die Luftmenge des Luftfederbalges nicht verändert wird und einer Durchlaßstellung, in der eine Veränderung der Luftmenge des Luftfederbalges erfolgt. Dem Luftfederbalg (1) ist das Belüftungs-/Entlüftungs-Ventil (3) und dem Luftfederbalg (2) das Belüftungs-/Entlüftungs-Ventil (4) zugeordnet.

Zur kontinuierlichen Erfassung der Höhen, nämlich der Abstände des Fahrzeugaufbaus gegenüber der Fahrzeugachse, sind Höhensensoren vorgesehen. Diese Höhensensoren ermitteln die genannten Abstände an den Positionen der Luftfederbälge und geben diese Werte in Form elektrischer Signale an einen Elektronik-Regler (15) weiter. Zur Höhenbestimmung des Fahrzeugaufbaus sind bezüglich einer Achse zwei Höhensensoren vorgesehen, und zwar Höhensensor (11) für Luftfederbalg (1) und Höhensensor (12) für Luftfederbalg (2).

Zur kostengünstigen Realisierung der Niveauregeleinrichtung werden die Höhenregelungen an den einzelnen Achs-Positionen im Zeitmultiplexverfahren, d. h. zeitlich hintereinander, abgewickelt. Dadurch können Komponenten für alle Regelpositionen gemeinsam vorgesehen werden. So ist für die Regelpositionen "links" und "rechts" ein als 3/2-Wege-Magnetventil ausgebildetes gemeinsames Richtungsventil (5) vorgesehen, welches festlegt, ob der Luftfederbalg der Regelposition, welche gerade bearbeitet wird, über einen Luftvorrat (6) belüftet oder ob dieser Luftfederbalg über eine Entlüftung (7) zur Atmosphäre entlüftet werden soll. Je nachdem, ob be- oder entlüftet wird, nimmt das Ventil (5) die Belüftungs- oder Entlüftungsstellung ein. Bei nicht erregtem Magneten wird die Entlüftungsstellung eingenommen.

Zur Regelung der Luftmenge in den Luftfederbälgen (1, 2) ist der Elektronik-Regler (15) vorgesehen, der über drei Eingänge (13, 14, 28) und vier Ausgänge (16, 17, 18, 29) verfügt. Der erste Eingang (13) ist mit dem Höhensensor (11), der zweite Eingang (14) ist mit dem Höhensensor (12), und der dritte Eingang (28) ist mit einem Ausgang (27) einer unten erläuterten Beladungs-Ermittlungs-Einrichtung (19) verbunden; der erste Ausgang (16) steuert das gemeinsame Richtungsventil (5), der zweite Ausgang (17) steuert das Belüftungs-/Entlüftungs-Ventil (3), der dritte Ausgang (18) steuert das Belüftungs-/Entlüftungs-Ventil (4), und der vierte Ausgang (29) steuert ein unten erläutertes Querstrom-Drosselventil (30) an.

3

Der Ausgang des gemeinsamen Richtungsventils (5) ist mit einer Leitung (8) verbunden, welche zu den Belüftungs/Entlüftungs-Ventilen (3, 4) führt, die die Funktion von Stellventilen für die Luftfederbälge (1, 2) erfüllen; hierbei sind das Stellventil (3) über eine Leitung (9) mit dem Luftfederbalg (1) und das Stellventil (4) über eine Leitung (10) mit dem Luftfederbalg (2) verbunden. Bei den Stellventilen (3, 4) liegt bei nicht erregtem Magneten die Abschlußstellung vor; in dieser Schaltstellung bleibt die Luftmenge in dem Luftfederbalg, der mit dem jeweiligen Stellventil verbunden ist, unverändert. Bei erregtem Magneten eines Stellventils schaltet dieses in Durchlaßstellung um; in dieser Stellung wird die Luftmenge in dem Luftfederbalg, welcher mit dem Stellventil verbunden ist, verändert, wobei , wie vorstehend beschrieben, die Art der Veränderung (Be- bzw. Entlüften) von der gewählten Stellung des gemeinsamen Richtungsventils (5) abhängt.

Zur Niveauregelung einer Achse werden unter Verwendung der zwei Höhensensoren (11, 12) zwei gesonderte Regelkreise mit jeweils einer eigenen Kombination von Höhensensor, Luftfederbalg und Stellventil gebildet. Bezüglich des Luftfederbalges an der Achse "links" ist dies die Kombination der Elemente mit den Bezugszeichen (11), (1) und (3), bezüglich des Luftfederbalges an der Achse "rechts" ist es diejenige mit den Bezugszeichen (12), (2) und (4).

Im weiteren ist das Querstrom-Drosselventil (30) vorgesehen, mit Hilfe dessen die Luftfederbälge (1, 2) über eine Drossel verbindbar sind. Dieses 2/2-Wege-Magnetventil verfügt über eine erste, bei nicht erregtem Magneten eingenommene Schaltstellung (31), bei der die Bälge getrennt sind, und eine zweite, bei erregtem Magneten eingenommene Schaltstellung (32), bei der die beiden Luftfederbälge (1, 2) über eine Drossel verbunden werden. Der Schaltmagnet des Ventils (30) wird über den vierten Ausgang (29) des Elektronik-Reglers (15) betätigt.

Es ist weiter die Beladungs-Ermittlungs-Einrichtung (19) vorgesehen, welche über einen ersten pneumatischen Eingang (20), einen zweiten pneumatischen Eingang (21) und den elektrischen Ausgang (27) verfügt. Der erste Eingang (20) ist mit dem Luftfederbalg (1), der zweite Eingang (21) ist mit dem Luftfederbalg (2) verbunden. Der elektrische Ausgang (27) der Beladungs-Ermittlungs-Einrichtung (19) ist mit dem dritten Eingang (28) des Elektronik-Reglers (15) verbunden. Die Beladungs-Ermittlungs-Einrichtung (19) enthält zwei Drucksensoren (23, 24), welche mit dem ersten Eingang (20) bzw. dem zweiten Eingang (21) verbunden sind. Die elektrischen Analog-Ausgänge der Drucksensoren (23, 24) werden zu zwei elektrischen Eingängen einer Mittelwertbildung (25) geführt. In der Mittelwertbildung (25) wird der Mittelwert aus den beiden analogen Ausgangsspannungen der zwei Drucksensoren (23, 24) gebildet. Das Ergebnis der Mittelwertbildung besteht aus einem elektrischen Analogsignal, das am Ausgang der Einheit (25) ausgegeben wird und zu einem Diskriminator (26) geführt wird.

Der Diskriminator (26) vergleicht das Analogsignal an seinem Eingang mit einem Grenzwert und gibt an seinem Ausgang entweder ein logisches 1- oder ein logisches 0-Signal ab. Ein log.0-Signal wird abgegeben, wenn das Analogsignal am Eingang kleiner als der Grenzwert ist, ein log.1-Signal wird abgegeben, wenn das Analogsignal am Eingang den Grenzwert erreicht oder überschreitet. Der Ausgang des Diskriminators (26) stellt den Ausgang der Beladungs-Ermittlungs-Einrichtung (19) dar, über den, wie erläutert, ein logisches, d. h. digitales Signal abgegeben wird.

Da die Luftfederbälge (1, 2) den Fahrzeugaufbau über der Achse tragen, ist der Druck in den Luftfederbälgen proportional zum Achsgewicht, welches auf die Achse einwirkt. Dieses Achsgewicht besteht aus einem ersten Anteil, der durch die Mechanik des Aufbaus selbst gegeben ist und einem zweiten Anteil, der durch die Beladung des Fahrzeugs bestimmt wird, welcher üblicherweise gegenüber dem ersten Anteil vergleichsweise groß werden kann. In den Drucksensoren (23, 24) werden daher die linken und rechten Anteile des Achsgewichtes gemessen. Um auch bei asymmetrischer Last ein genaues Maß für das Achsgewicht zu bekommen, wird in der Einheit "Mittelwert-Bildung" (25) der Mittelwert aus den Meßwerten der Drucksensoren (23, 24) gewonnen. Der erwähnte Grenzwert im Diskriminator (26) ist auf der Basis der Fahrzeugdaten so gewählt, daß man bei seiner Unterschreitung auf ein unbeladenes Fahrzeug und bei seiner Überschreitung auf ein beladenes Fahrzeug schließen kann. Die beschriebene Beladungs-Ermittlungs-Einrichtung (19) liefert also am dritten Eingang (28) des Elektronik-Reglers (15) im Falle des unbeladenen Fahrzeugs ein log.0-Signal und im Falle des beladenen Fahrzeugs ein log.1-Signal an.

Der Elektronik-Regler (15) vermag nach zwei unterschiedlichen Regelstrukturen, einer Zwei-Meßpunkt-Regelung und einer Ein-Meßpunkt-Regelung, zu regeln. Die Umschaltung der Struktur erfolgt in Abhängigkeit von dem am dritten Eingang (28) anliegenden Signal: Liegt dort ein log.1-Signal an (beladenes Fahrzeug), so wird die Zwei-Meßpunkt-Regelung eingeschaltet, liegt dagegen ein log.0-Signal an (unbeladenes Fahrzeug), so wird die Ein-Meßpunkt-Regelung gewählt.

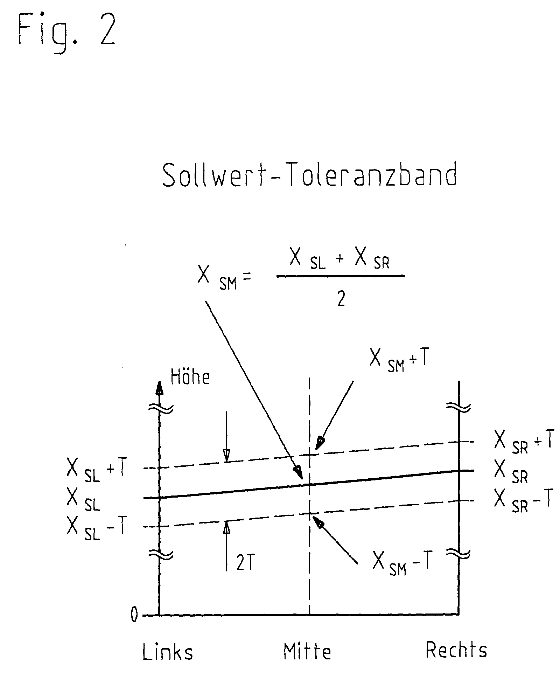

Im folgenden wird zunächst die für das beladene Fahrzeug geltende Zwei-Meßpunkt-Regelung beschrieben. Die Niveauregelung der Luftfederbälge (1, 2) nach Fig. 1 erfolgt dabei entsprechend dem in Fig. 2 angegebenen Sollwert-Toleranzband.

Im Elekronik-Regler (15) nach Fig. 1 ist in geeigneter, nicht dargestellter Weise für den linken Luftfederbalg ein Sollwert $X_{SL}$ und für den rechten Luftfederbalg ein Sollwert $X_{SR}$ eingespeichert. Es besteht z. B., wie eingangs erwähnt, die Möglichkeit, diese Sollwerte über eine handbetätigte Fernsteuerung vorzugeben. Die linken und rechten Sollwerte $X_{SL}$ und $X_{SR}$ können, wie auch in Fig. 2 dargestellt, auf unterschiedliche Höhen eingestellt sein.

Um diese Höhen-Sollwerte $X_{SL}$ und $X_{SR}$ wird entsprechend Fig. 2 ein Toleranzband gebildet, das sich von dem jeweiligen Sollwert um einen Wert T zu höheren und um den Wert T zu niederen Werten erstreckt; das Toleranzband hat damit eine Breite von 2T.

Wie erläutert, steht am ersten Eingang (13) des Elektronik-Reglers (15) der Meßwert des dem Luftfederbalg (1) zugeordneten Höhensensors (11) an. Dieser Meßwert stellt den Höhen-Istwert $X_{IL}$ für den linken Luftfederbalg dar. In sinngemäß gleicher Weise steht am zweiten Eingang (14) des Elektronik-Reglers (15) der Höhen-Istwert $X_{IR}$ für den rechten Luftfederbalg (2) an.

Bei einem Beladungswechsel ändert sich das Gewicht des Fahrzeugaufbaus und damit ändern sich auch - aufgrund ihrer Federcharakteristik - die Höhen der Luftfederbälge einer Achse: Es verändern sich die Höhen-Istwerte $X_{IL}$ und $X_{IR}$.

Wird die Beladung z. B. vergrößert, so stellen sich kleinere Werte $X_{IL}$ und $X_{IR}$ ein. Überschreitet diese Beladungs-Vergrößerung eine gewisse Grenze, so fallen die sich neu einstellenden Höhen-Istwerte außerhalb des Sollwert-Toleranzbandes. Bei symmetrischer Beladung wird dann im allgemeinen das Toleranzband sowohl "links" als auch "rechts" unterschritten; in diesem Fall stellt sich ein neuer Höhen-Istwert "links" $X_{IL}$ ein, der kleiner ist als der das Sollwert-Toleranzband begrenzende untere Wert ($X_{SL}$-T) auf der linken Seite und als Höhen-Istwert "rechts" stellt sich ein Istwert $X_{IR}$ ein, der kleiner ist als der das Sollwert-Toleranzband begrenzende untere Wert ($X_{SR}$-T) auf der rechten Seite der Achse.

Als Folge dieser Unterschreitung des Sollwert-Toleranzbandes durch die Istwerte wird die Niveauregelung aktiviert. Die Luftmenge in den Luftfederbälgen (1, 2) nach Fig. 1 wird solange erhöht, bis sich an den Höhen-Sensoren (11, 12) nach Fig. 1 Höhen-Istwerte $X_{IL}$ und $X_{IR}$ einstellen, die innerhalb des in Fig. 2 erläuterten Sollwert-Toleranzbandes liegen. Im erwähnten zeitlichen Hintereinander (Zeitmultiplexverfahren) werden über die zwei erwähnten Regelkreise mit ihrer Kombination der Elemente (11, 1, 3) und (12, 2, 4) die beiden Luftfederbälge (1, 2) nach Fig. 1 belüftet, wobei das gemeinsame Richtungsventil (5) in die Belüftungsstellung geschaltet ist.

Ist die erwähnte Beladung nicht symmetrisch sondern einseitig, so wird im allgemeinen das Sollwert-Toleranzband nur auf einer Seite "links" oder "rechts", nämlich derjenigen Seite unterschritten, auf welche die einseitige Beladung einwirkt. In diesem Fall wird im Verlauf der Niveauregelung nur der Luftbalg auf der Seite der Sollwert-Toleranzunterschreitung belüftet; durch die Belüftung wird die Luftmenge in dem betroffenen Luftfederbalg solange erhöht, bis sich an diesem Luftfederbalg ein Höhen-Istwert einstellt, der in das Sollwert-Toleranzband fällt.

Wird die Beladung eines Fahrzeugs reduziert, so dehnen sich die Luftfederbälge einer Achse aus und die Höhen-Istwerte $X_{IL}$ und $X_{IR}$ der Höhensensoren (11, 12) nach Fig. 1 werden vergrößert. Bei dieser Beladungs-Reduzierung wird möglicherweise das Sollwert-Toleranzband nach Fig. 2 an der linken Seite überschritten (wenn $X_{IL}$>($X_{SL}$+T)), an der rechten Seite überschritten (wenn $X_{IR}$>($X_{SR}$+T)), oder sie werden sowohl an der linken und der rechten Seite überschritten. Die von der Sollwert-Toleranzbandüberschreitung betroffenen Luftfederbälge (1, 2, oder 1 und 2) werden entlüftet, bis die ihnen zugeordneten Höhen-Istwerte ($X_{IL}$, $X_{IR}$, oder $X_{IL}$ und $X_{IR}$) wieder in das Sollwert-Toleranzband nach Fig. 2 fallen. Diese Entlüftung erfolgt in sinngemäß gleicher Weise wie die oben beschriebene Belüftung, wobei das gemeinsame Richtungsventil (5) nach Fig. 1 in die Entlüftungsstellung geschaltet ist.

In der vorstehend erläuterten Zwei-Meßpunkt-Regelung sind durch die Höhensensoren "links" und "rechts" (11, 12) zwei Meßpunkte mit ihren Höhen-Istwerten $X_{IL}$ und $X_{IR}$ festgelegt. Entsprechend Fig. 2 ist für den Meßpunkt "links" ein eigener Toleranzbereich $[(X_{SL}-T) \leq X_{IL} \leq (X_{SL}+T)]$ und für den Meßpunkt "rechts" ebenfalls ein eigener Toleranzbereich $[(X_{SR}-T) \leq X_{IR} \leq (X_{SR}+T)]$ definiert. Die beiden Meßpunkten (11, 12) zugeordneten Luftfederbälge (1, 2) werden unabhängig voneinander geregelt; in dieser Betriebsart wird daher die horizontale Ausrichtung (Gerade- bzw. Schiefstellung) der den Luftfederbälgen zugeordneten Fahrzeugachse beeinflußt.

Im Gegensatz zur Zwei-Meßpunkt-Regelung wird bei der Ein-Meßpunkt-Regelung die horizontale Ausrichtung einer Fahrzeugachse, die zwei Luftfederbälgen "links" und "rechts" zugeordnet ist, nicht beeinflußt. Statt zwei Höhen-Istwerten wird zum Zwecke der Niveauregelung ein Höhen-Istwert $X_{IM}$ verwendet, welcher die "Mitte" der Fahrzeugachse darstellt. Der neue Höhen-Istwert $X_{IM}$ wird erzeugt, indem aus den von den Höhen-Sensoren (11, 12) nach Fig. 1 gelieferten Höhen-Istwerten $X_{IL}$ und $X_{IR}$ der arithmetische Mittelwert gebildet wird:

$$X_{IM} = \frac{X_{IL} + X_{IR}}{2}$$

Wie in Fig. 2 dargestellt, wird für die "Mitte" ein Sollwert-Toleranzband gebildet, welches mit einer Breite von 2T um einen Mitten-Sollwert $X_{SM}$ gebildet wird, welcher ebenfalls durch das arithmetische Mittel zwischen dem linken Höhen-Sollwert $X_{SL}$ und dem rechten Höhen-Sollwert $X_{SR}$ bestimmt wird:

$$X_{SM} = \frac{X_{SL} + X_{SR}}{2}$$

In der Ein-Meßpunkt-Regelung werden die Luftfederbälge (1, 2) nach Fig. 1 nie einzeln sondern immer nur gemeinsam belüftet bzw. entlüftet. Daher werden die den Luftfederbälgen (1, 2) zugeordneten Stellventile (3, 4) bei jeder Veränderung der Luftmenge in beiden Luftfederbälgen immer gemeinsam angesteuert; fällt der Höhen-Istwert $X_{IM}$ aus dem Sollwert-Toleranzband für die "Mitte" des Fahrzeugs nach Fig. 2, so werden die Luftfederbälge (1, 2) solange gemeinsam belüftet bzw. entlüftet, bis der Höhen-Istwert $X_{IM}$ wieder in das Sollwert-Toleranzband für die "Mitte" fällt. Je nachdem, ob zur Erreichung des Sollwert-Toleranzbandes eine Belüftung bzw. Entlüftung erforderlich ist, wird das Richtungsventil (5) nach Fig. 1 in den Zustand "Belüften" oder den Zustand "Entlüften" geschaltet.

Bei der Ein-Meßpunkt-Regelung wird das Querstrom-Drosselventil (30) in die Drosselstellung (32) geschaltet. Dadurch findet ein Ausgleich der Luftmengen in den Luftfederbälgen (1, 2) statt. Der Grund für diesen Ausgleich besteht darin, daß bei leicht asymmetrischem Verhalten der Stellventile (3, 4) und zusätzlichen Einflüssen durch die Leitungsführung sich in den Luftfederbälgen (1, 2) trotz synchroner Ansteuerung der Stellventile (3, 4) leichte Unterschiede in den Drücken einstellen könnten, die zu vermeiden sind. Der Druckausgleich zwischen Luftfederbalg (1) und Luftfederbalg (2) erfolgt durch die Wirkung der Drossel langsam, wodurch die für die Kurvenfahrt erforderliche Querstabilisierung erhalten bleibt.

Das Querstrom-Drosselventil (30) verbessert, wie erläutert, die Betriebsbedingungen bei der Ein-Meßpunkt-Regelung. Da dieses Ventil jedoch nicht von grundsätzlicher Bedeutung ist, kann es bei günstigen mechanischen Voraussetzungen zur Reduzierung der Herstellkosten gegebenenfalls weggelasen werden.

Es bestehen verschiedene Möglichkeiten, die Beladungs-Ermittlungs-Einrichtung im Vergleich zu der Beladungs-Ermittlungs-Einrichtung (19) nach Fig. 1 alternativ auszugestalten. Die Mittelwertbildung (25) und auch der Diskriminator (26) können in vorteilhafter Weise als Programmteil ausgeführt werden. Sollte der Elektronik-Regler (15) als Regler mit einem Regelprogramm ausgeführt sein, so läßt sich dieser Programmteil vorteilhaft in das Regelprogramm integrieren.

Wenn es bei einem Anwendungsfall ausreichend ist, die Beladung anhand des Druckes von nur einem der beiden Luftfederbälge (1, 2) zu ermitteln, so genügt es, in der Beladungs-Ermittlungs-Einrichtung (19) nur einen der beiden Drucksensoren (23, 24) vorzusehen. Bei einer solchen Ausführung kann man auch auf die Mittelwertbildung (25) verzichten; der elektrische Ausgang des nur noch einen verwendeten Drucksensors wird direkt in den Diskriminator (26) eingespeist.

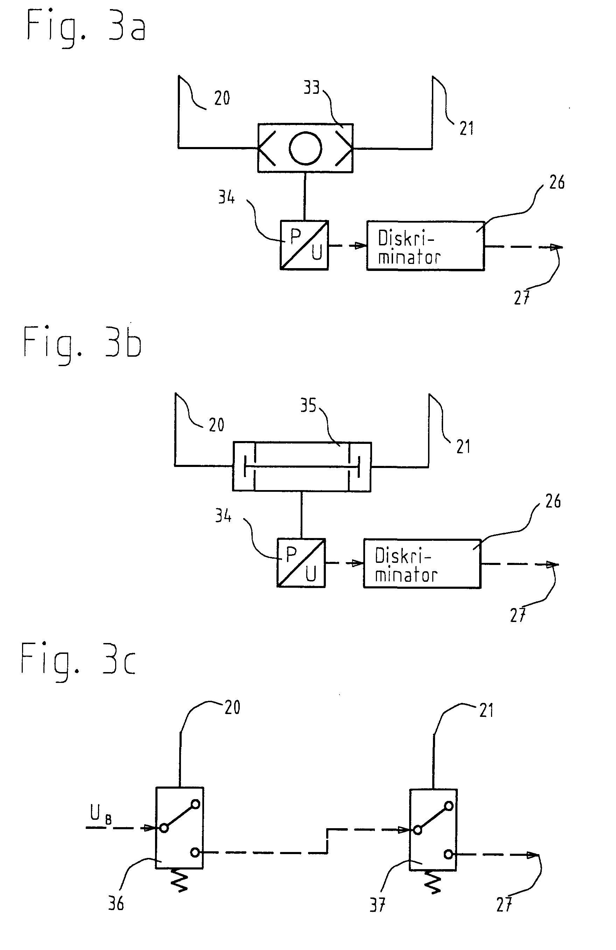

In Fig. 3a bis Fig. 3c sind weitere alternative Ausführungsformen der Beladungs-Ermittlungs-Einrichtung (19) nach Fig. 1 dargestellt.

In Fig. 3a führt der erste Eingang (20) der Beladungs-Ermittlungs-Einrichtung zu einem ersten Eingang eines Wechselventiles (33); der zweite Eingang (21) der Beladungs-Ermittlungs-Einrichtung führt zu einem zweiten Eingang desselben Wechselventils (33). Der Ausgang des Wechselventils ist mit dem pneumatischen Eingang eines Drucksensors (34) verbunden, der elektrische Ausgang des Drucksensors (34) führt zu dem Eingang des Diskriminators (26). Bei dieser Ausführungsform wird nur ein Drucksensor benötigt; aufgrund der Schaltcharakteristik des Wechselventils (33) wird zur Bestimmung des Beladungszustandes der höhere Druck von den Drücken in den beiden Luftfederbälgen (1, 2) ausgewählt ("Select High").

In der Ausführungsform nach Fig. 3b ist das Wechselventil (33) aus Fig. 3a durch ein Doppel-Absperrventil (35) ersetzt. Bei dieser Ausführungsform ist ebenfalls nur ein Drucksensor (34) erforderlich; hier wird aufgrund der Schaltcharakteristik des Doppel-Absperrventils der geringere Druck von den Drücken in den beiden Luftfederbälgen (1, 2) zur Bestimmung der Beladung herangezogen ("Select Low").

In Fig. 3c ist eine Abwandlung der Beladungs-Ermittlungs-Einrichtung dargestellt, bei der zwei Druckschalter mit den ersten und zweiten Eingängen der Beladungs-Ermittlungs-Einrichtung (20, 21) verbunden sind. Die Beschaltung der Druckschalter zeigt, daß am Ausgang (27) ein logisches 1-Signal anliegt, wenn sowohl der Druckschalter (36) als auch der Druckschalter (37) angesprochen haben, d. h. wenn sowohl im Luftbalg (1) als auch im Luftbalg (2) ein Druck herrscht, der größer ist als der Schaltdruck für die Druckschalter. Wie aus der Funktion erkennbar, sind bei dieser Ausführungsform Druckschalter mit geeignetem Schaltpunkt zu wählen. Die Ausführungsform nach Fig. 3c läßt sich noch weiter vereinfachen, wenn man auf einen der beiden Druckschalter (36, 37) verzichtet. In diesem einfachsten Fall besteht die Beladungs-Ermittlungs-Einrichtung nur noch aus einem Druckschalter.

Bezugszeichenliste

| Bezugszeichenliste | |
|---|---|
| ( 1) Luftfederbalg an Achse links | Fig. 1 |
| ( 2) Luftfederbalg an Achse rechts | Fig. 1 |

(fortgesetzt)

| Bezugzeichenliste | |
|---|---|
| ( 3) Stellventil Luftfederbalg (1), Belüftungs/Entlüftungsventil | Fig. 1 |
| ( 4) Stellventil Luftfederbalg (2), Belüftungs/Entlüftungsventil | Fig. 1 |
| ( 5) Gemeinsames Richtungsventil | Fig. 1 |
| ( 6) Luftvorrat | Fig. 1 |
| ( 7) Entlüftung Richtungsventil (5) | Fig. 1 |
| ( 8) Leitung zu Stellventilen (3,4) | Fig. 1 |
| ( 9) Leitung Stellventil (3) zu Luftfederbalg (1) | Fig. 1 |
| (10) Leitung Stellventil (4) zu Luftfederbalg (2) | Fig. 1 |
| (11) Höhensensor Luftfederbalg (1) | Fig. 1 |
| (12) Höhensensor Luftfederbalg (2) | Fig. 1 |
| (13) Erster Eingang Elektronik-Regler (15) | Fig. 1 |
| (14) Zweiter Eingang Elektronik-Regler (15) | Fig. 1 |
| (15) Elektronik-Regler | Fig. 1 |
| (16) Erster Ausgang Elektronik-Regler (15) | Fig. 1 |
| (17) Zweiter Ausgang Elektronik-Regler (15) | Fig. 1 |
| (18) Dritter Ausgang Elektronik-Regler (15) | Fig. 1 |
| (19) Beladungs-Ermittlungs-Einrichtung | Fig. 1 |
| (20) Erster pneumat. Eingang Einrichtung (19) | Fig. 1 |
| (21) Zweiter pneumat. Eingang Einrichtung (19) | Fig. 1 |
| (23) Drucksensor | Fig. 1 |
| (24) Drucksensor | Fig. 1 |
| (25) Mittelwertbildung | Fig. 1 |
| (26) Diskriminator | Fig. 1 |
| (27) Elektrischer Ausgang Einrichtung (19) | Fig. 1 |
| (28) Dritter Eingang Elektronik-Regler (15) | Fig. 1 |
| (29) Vierter Ausgang Elektronik-Regler (15) | Fig. 1 |
| (30) Querstrom-Drosselventil | Fig. 1 |
| (31) Schaltstellung Ventil (30), Magnet nicht erregt | Fig. 1 |
| (32) Schaltstellung Ventil (30), Magnet erregt | Fig. 1 |
| (33) Wechselventil | Fig. 3a |
| (34) Drucksensor | Fig. 3a |
| (35) Doppel-Absperrventil | Fig. 3b |
| (36) Druckschalter | Fig. 3c |
| (37) Druckschalter | Fig. 3c |

**Patentansprüche**

1.  Mit Druckmittel arbeitende Niveauregeleinrichtung mit folgenden Merkmalen:

    a) es sind Druckmittelkammern (1, 2) vorgesehen, die einen Fahrzeugaufbau tragen;

    b) es ist eine Ventileinrichtung (3, 4, 30) vorgesehen, die mit den Druckmittelkammern (1, 2) verbunden ist;

    c) die Ventileinrichtung (3, 4, 30) ist mit einer Druckmittelquelle (6) oder mit einer Druckmittelsenke (7) verbindbar und dient zur Druckveränderung in den Druckmittelkammern (1, 2);

    d) es sind Sensoren (11, 12) vorgesehen, welche Ist-Abstände zwischen Fahrzeugachsen und dem Fahrzeugaufbau ermitteln;

    e) es ist eine Regeleinrichtung (15) vorgesehen, der frei wählbare Soll-Abstände zwischen den Fahrzeugachsen und dem Fahrzeugaufbau vorgebbar sind und die die Ventileinrichtung in Abhängigkeit von der Regelabweichung, nämlich den Differenzen zwischen den entsprechenden Soll- und Ist-Abständen, steuert;

f) durch Druckveränderungen bzw. durch Veränderung der Druckmittelmengen in den Druckmittelkammern (1, 2) werden die Ist-Abstände gleich den Soll-Abständen;

g) einer Fahrzeugachse sind je 2 Druckmittelkammern (1, 2) und je 2 Sensoren (11, 12) zugeordnet;

h) die Struktur der Regeleinrichtung (15) wird in Abhängigkeit von der Beladung umgeschaltet, wobei zwei Fälle der Beladung vorgesehen sind;

gekennzeichnet durch die folgenden Merkmale:

i) die Beladung wird aufgrund der Drücke in den Druckmittelkammern (1, 2) ermittelt und die Unterscheidung der Fälle erfolgt anhand eines Beladungs-Grenzwertes;

k) ein erster Fall "Leer-Fahrzeug" entspricht den Gegebenheiten eines leerstehenden Fahrzeugs und liegt dann vor, wenn die Beladung den Beladungs-Grenzwert unterschreitet;

l) ein zweiter Fall "Last-Fahrzeug" entspricht den Gegebenheiten eines beladenen Fahrzeugs und liegt dann vor, wenn die Beladung den Beladungs-Grenzwert erreicht oder überschreitet.

m) für den Fall des Leer-Fahrzeugs ist eine Ein-Messpunkt-Regelung vorgesehen, die eine mögliche Schiefstellung nicht beeinflußt;

n) für den Fall des Last-Fahrzeugs ist eine Zwei-Messpunkt-Regelung vorgesehen, bei der eine mögliche Schiefstellung in eine Geradestellung korrigiert wird.

2. Einrichtung nach Anspruch 1, dadurch gekennzeichnet, daß als Beladungs-Maß für die Fahrzeugachse der Mittelwert der Drücke in den ihr zugeordneten Druckmittelkammern verwendet wird.

3. Einrichtung nach Anspruch 1, dadurch gekennzeichnet, daß als Beladungs-Maß für die Fahrzeugachse der höchste Druck aus den Drücken der Druckmittelkammern, welche der Fahrzeugachse zugeordnet sind, verwendet wird.

4. Einrichtung nach Anspruch 1, dadurch gekennzeichnet, daß als Beladungs-Maß für die Fahrzeugachse der niedrigste Druck aus den Drücken der Druckmittelkammern, welche der Fahrzeugachse zugeordnet sind, verwendet wird.

5. Einrichtung nach einem der Ansprüche 1 bis 4, dadurch gekennzeichnet, daß zur Ermittlung der Beladung mindestens ein Element zur Druckermittlung vorgesehen ist.

6. Einrichtung nach Anspruch 5, dadurch gekennzeichnet, daß das Element zur Druckermittlung aus einem Drucksensor besteht.

7. Einrichtung nach Anspruch 5, dadurch gekennzeichnet, daß das Element zur Druckermittlung aus einem Druckschalter besteht.

8. Einrichtung nach einem der Ansprüche 5 bis 7, dadurch gekennzeichnet, daß, falls die Anzahl der Elemente zur Druckermittlung kleiner ist als die Anzahl der Druckmittelkammern, welche der Fahrzeugachse zugeordnet sind, mindestens ein Schaltelement vorgesehen ist, welches einen bestimmten Druck einer Druckmittelkammer aus der Gesamtzahl aller Druck-Werte von den der Fahrzeugachse zugeordneten Druckmittelkammern auswählt.

9. Einrichtung nach Anspruch 8, dadurch gekennzeichnet, daß Art und Funktion des Schaltelementes durch die vorgesehene Logik der Auswahl bestimmt ist.

**EP 0 779 168 B1**

**Claims**

1. Level control device operating with pressure medium, having the following features:

    a) pressure medium chambers (1, 2), which carry a vehicle superstructure, are provided;

    b) a valve device (3, 4, 30), which is connected to the pressure medium chambers (1, 2), is provided;

    c) the valve device (3, 4, 30) is arranged to be connected to a pressure medium source (6) or to a pressure medium sink (7) and serves for changing the pressure in the pressure medium chambers (1, 2);

    d) sensors (11, 12), which detect instantaneous spacings between vehicle axles and the vehicle superstructure, are provided;

    e) a control device (15) is provided, which is arranged to be preset with freely selectable desired spacings between the vehicle axles and the vehicle superstructure and which controls the valve device in dependence upon the control error, namely the differences between the corresponding desired spacings and instantaneous spacings;

    f) the instantaneous spacings become equal to the desired spacings as a result of changes in pressure or as a result of a change in the amounts of pressure medium in the pressure medium chambers (1, 2);

    g) with each vehicle axle there are associated 2 pressure medium chambers (1, 2) and 2 sensors (11, 12);

    h) the structure of the control device (15) is switched over in dependence upon the loading, provision being made for two cases of loading;

    <u>characterised by the following features:</u>

    i) the loading is detected on the basis of the pressures in the pressure medium chambers (1, 2) and the cases are differentiated with reference to a loading limit value;

    k) a first case, "empty vehicle", corresponds to the conditions of an empty vehicle and is present when the loading is less than the loading limit value;

    l) a second case, "laden vehicle", corresponds to the conditions of a loaded vehicle and is present when the loading reaches or exceeds the loading limit value;

    m) for the case of the empty vehicle, there is provided a one-measurement-point control, which does not influence a possible slanting position;

    n) for the case of the laden vehicle, there is provided a two-measurement-point control, wherein a possible slanting position is corrected into a straight position.

2. Device according to claim 1, <u>characterised in that</u> the average value of the pressures in the pressure medium chambers associated with the vehicle axle is used as the measure of loading for the vehicle axle.

3. Device according to claim 1, <u>characterised in that</u> the highest pressure of the pressures of the pressure medium chambers associated with the vehicle axle is used as the measure of loading for the vehicle axle.

4. Device according to claim 1, <u>characterised in that</u> the lowest pressure of the pressures of the pressure medium chambers associated with the vehicle axle is used as the measure of loading for the vehicle axle.

5. Device according to any one of claims 1 to 4, <u>characterised in that</u> at least one element for detecting pressure is provided for detection of the loading.

6. Device according to claim 5, <u>characterised in that</u> the element for detecting pressure consists of a pressure sensor.

**7.** Device according to claim 5, <u>characterised in that</u> the element for detecting pressure consists of a pressure switch.

**8.** Device according to any one of claims 5 to 7, <u>characterised in that,</u> if the number of elements for detecting pressure is less than the number of pressure medium chambers associated with the vehicle axle, there is provided at least one switching element which selects a particular pressure of a pressure medium chamber from the total number of all pressure values of the pressure medium chambers associated with the vehicle axle.

**9.** Device according to claim 8, <u>characterised in that</u> the nature and function of the switching element are determined by the logic provided for the selection.


**Revendications**

**1.** Dispositif de régulation de niveau travaillant avec un fluide sous pression, présentant les caractéristiques suivantes :

a) il est prévu des chambres à fluide sous pression (1,2), qui supportent un châssis de véhicule,
b) il est prévu un dispositif à soupapes (3,4,30), qui est relié aux chambres à fluide sous pression (1,2);
c) le dispositif à soupapes (3,4,30) peut être relié à une source de fluide sous pression (6) ou à un récepteur de fluide sous pression (7) et sert à modifier la pression dans les chambres à fluide sous pression (1,2);
d) il est prévu des capteurs (11,12), qui déterminent les distances réelles entre des essieux du véhicule et le châssis du véhicule;
e) il est prévu un dispositif de régulation (15), pour lequel peuvent être prédéterminées des distances de consigne pouvant être choisies librement entre les essieux du véhicule et le châssis du véhicule, et qui commande le dispositif à soupapes en fonction de l'écart de régulation, à savoir la différence entre la distance de consigne et la distance réelle, correspondantes;
f) les distances réelles sont rendues égales aux distances de consigne sous l'effet de modifications de la pression ou daube modification des quantités de fluide sous pression dans les chambres à fluide sous pression (1,2);
g) respectivement 2 chambres à fluide sous pression (1,2) et respectivement 2 capteurs (11,12) sont associés à un essieu du véhicule;
h) la structure du dispositif de régulation (15) est commutée en fonction de la charge, deux cas de charge étant prévus,

caractérisé par les caractéristiques suivantes :

i) la charge est déterminée sur la base des pressions dans les chambres à fluide sous pression (1, 2) et la différenciation des cas s'effectue sur la base d'une valeur limite de la charge;
k) un premier cas "véhicule vide" correspond aux données d'un véhicule à vide et est présent lorsque la charge est inférieure à la valeur limite de charge;
l) un deuxième cas "véhicule en charge" correspond aux données d'un véhicule chargé et est présent lorsque la charge atteint ou dépasse la valeur limite de charge,
m) dans le cas du véhicule à vide, il est prévu une régulation du point de mesure, qui n'influe pas sur une position penchée possible,
n) dans le cas du véhicule en charge, il est prévu une régulation en deux points de mesure, lors de laquelle une position penchée possible est corrigée en une position droite.

**2.** Dispositif selon la revendication 1, caractérisé en ce qu'on utilise comme mesure de la charge pour l'essieu du véhicule la valeur moyenne des pressions dans les chambres à fluide sous pression qui lui sont associées.

**3.** Dispositif selon la revendication 1, caractérisé en ce qu'on utilise comme mesure de la charge pour l'essieu du véhicule la pression maximale parmi les pressions des chambres à fluide sous pression, qui sont associées à l'essieu du véhicule.

**4.** Dispositif selon la revendication 1, caractérisé en ce qu'on utilise comme mesure de la charge pour l'essieu du véhicule la pression minimale parmi les pressions des chambres à fluide sous pression, qui sont associées à l'essieu du véhicule.

**5.** Dispositif selon l'une des revendications 1 à 4, caractérisé en ce que pour déterminer la charge, on prévoit au moins un élément de détermination de la pression.

**6.** Dispositif selon la revendication 5, caractérisé en ce que l'élément servant à déterminer la pression est constitué par un capteur de pression.

**7.** Dispositif selon la revendication 5, caractérisé en ce que l'élément servant à déterminer la pression est constitué par un interrupteur manométrique.

**8.** Dispositif selon l'une des revendications 5 à 7, caractérisé en ce que, dans le cas où le nombre des éléments servant à déterminer la pression est inférieur au nombre des chambres à fluide sous pression, qui sont associées à l'essieu du véhicule, il est prévu au moins un élément de commutation qui sélectionne une pression déterminée d'une chambre à fluide sous pression parmi la totalité des valeurs de pression des chambres à fluide sous pression associées à l'essieu du véhicule.

**9.** Dispositif selon la revendication 8, caractérisé en ce que le type et la fonction de l'élément de commutation sont déterminés par la logique prévue de la sélection.

Fig. 1

# Fig. 2

Sollwert-Toleranzband

$$X_{SM} = \frac{X_{SL} + X_{SR}}{2}$$

$X_{SM} + T$

Höhe

$X_{SR} + T$

$X_{SL} + T$

$X_{SR}$

$X_{SL}$

$X_{SR} - T$

$X_{SL} - T$

2T

$X_{SM} - T$

0

Links      Mitte      Rechts

Fig. 3a

20    33                      21

34

P/U    →    Diskri-
                minator    - - →

26

27

Fig. 3b

20    35                      21

34

P/U    →    Diskri-
                minator    - - →

26

27

Fig. 3c

20                           21

$U_B$

36            37              27